Europäisches Patentamt

European Patent Office

Office européen des brevets

(11) Publication number: **0 413 490 A2**

## EUROPEAN PATENT APPLICATION

(21) Application number: **90308650.2**

(22) Date of filing: **06.08.90**

(51) Int. Cl.⁵: **H04Q 11/04, H04M 11/06**

(30) Priority: **15.08.89 US 394048**

(43) Date of publication of application:
**20.02.91 Bulletin 91/08**

(84) Designated Contracting States:
**DE ES FR GB IT**

(71) Applicant: **AMERICAN TELEPHONE AND TELEGRAPH COMPANY**
**550 Madison Avenue**
**New York, NY 10022(US)**

(72) Inventor: **Waxman, Harvey Stewart**
**7 Wagner Court**
**Holmdel, New Jersey 07733(US)**

(74) Representative: **Johnston, Kenneth Graham et al**
**AT&T (UK) LTD. AT&T Intellectual Property Division 5 Mornington Road**
**Woodford Green Essex, IG8 OTU(GB)**

(54) **Resource allocation scheme.**

(57) A scheme for allocating a plurality of resources to a plurality of resource uses permits maximum and minimum resources to be specified for each resource use. In response to a request for the allocation of a resource to a resource use, a resource will be allocated to that resource use if such an allocation will not exceed the maximum allocation for that resource use and such an allocation permits a minimum number of reserved resources to be maintained for at least one other resource use. This scheme, which can be administered via software, is particularly suitable for the allocation of resources in a communications system.

EP 0 413 490 A2

## RESOURCE ALLOCATION SCHEME

### Technical Field

The present invention relates to a scheme for allocating resources to a plurality of resource uses.

### Background of the Invention

Resource allocation problems are actual problems which arise in real physical systems concerning the deployment of specific technological or industrial resources for the production of particular technological or industrial results. Some typical examples are the assignment of transmission facilities in a communications system, inventory control, the control of product mix in a factory, the allocation of industrial equipment among a number of locations, etc. In typical applications, the allocation of resources is subject to constraints as resources are usually limited in a given application and, in addition, the advantage gained by the allocation of additional resources in a given application is subject to the law of diminishing returns.

Generally, an improper allocation of resources produces a significant detrimental effect. For example, in telecommunications systems prior to the Integrated Services Digital Network (ISDN), resources, such as trunk equipment, were allocated to a particular communications service and an allocation, once made, was generally fixed. These fixed allocations typically result in overequipping the system at a significant cost penalty to satisfy the expected demands for the different communications services. With the advent of ISDN, and in particular, the publicly offered call-by-call communications service, communications resources are administered so that each resource can be allocated to any of a variety of different communications services. Allocation of these communications resources to a particular communications service is made automatically for each call on a call-by-call basis by the telecommunications system. The problem with this resource allocation approach is that, while the cost penalty associated with overequipping the system is eliminated, one communications service can monopolize all of the available resources and effectively block user access to other communications services.

### Summary of the Invention

Broadly speaking, the present invention addresses the problem of resource allocation wherein a predetermined plurality of resources may be allocated to a variety of resource uses. In accordance with the present invention, maximum and minimum allocations for a particular resource use are specified. Resources for a particular resource use are then allocated so long as the maximum allocation for that resource use has not been exceeded and such an allocation would not violate a minimum reservation of resources for any other resource use.

More specifically, the present invention addresses the problem of resource monopolization in a communications environment by permitting a telecommunications system user to prescribe limits on the amount of resources which the telecommunications system may allocate to a particular communications service and is particularly adaptable to the allocation of private branch exchange (PBX) trunk resources in an ISDN environment.

### Brief Description of the Drawing

FIG. 1 is a block diagram of a prior art illustrative communications system application;

FIG. 2 is a block diagram of an illustrative communications system application which incorporates the present invention;

FIG. 3 is a block-schematic diagram of PBX 201 of FIG. 2;

FIG. 4 is a representation of the translation data stored in translation memory 310 of PBX 201;

FIG. 5 is a representation of the status data stored in status memory 311 of PBX 201;

FIG. 6 is a flowchart of the operations provided by control complex 300 in processing an incoming trunk call;

FIG. 7 is a flowchart of the operations provided by control complex 300 in processing an outgoing trunk call;

2

FIGs. 8 and 9 are flowcharts of the suboperations associated with operation 605 of FIG. 6, operation 705 of FIG. 7, and operation 1105 of FIG. 11.

FIG. 10 is a flowchart of the suboperations associated with operation 714 of FIG. 7; and

FIG. 11 is a flowchart of the operations provided by control complex 300 in attempting to service any calls that are in a trunk group's queue.

## Detailed Description

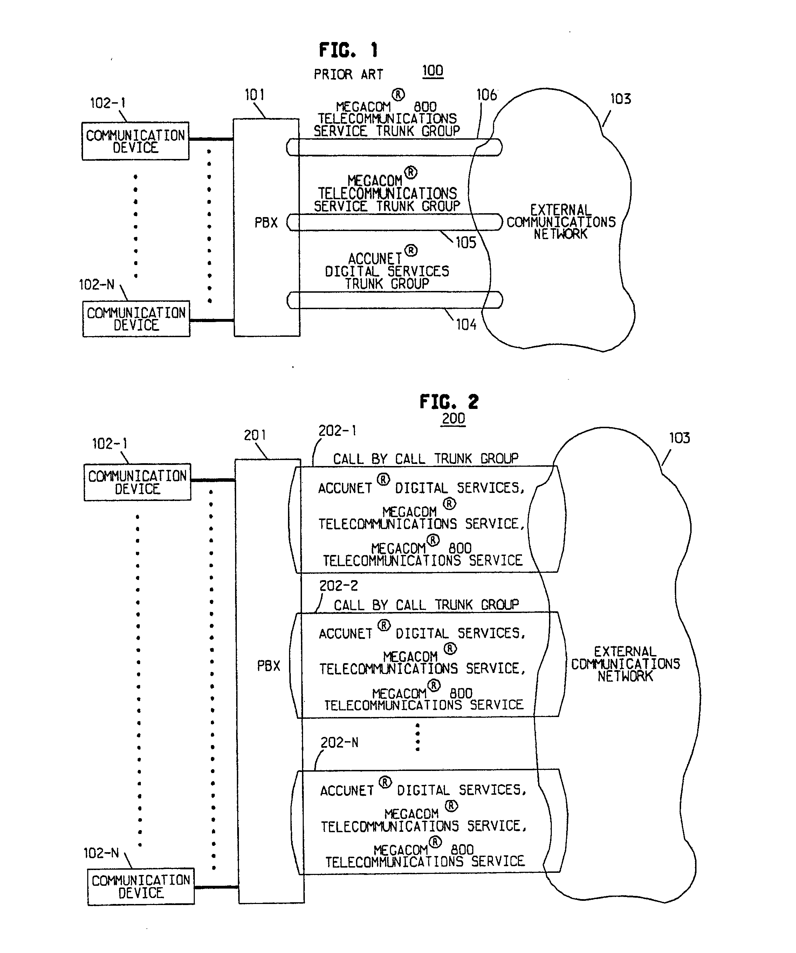

FIG. 1 shows an illustrative communications system 100 wherein a private branch exchange (PBX) 101 interconnects a plurality of communications devices 102-1 through 102-N to an external communications network 103. The communications devices encompass a myriad of types and may include station sets, personal computers, video terminals, environmental sensing devices, such as smoke and fire detectors, facsimile machines, etc. Network 103 may be a public network, private network, or both and may include other PBXs so as to provide a network of interconnected PBXs. Interconnection between the PBX and the external communications network is provided by trunk resources, i.e., trunk groups 104, 105 and 106. Each trunk group includes at least one communications facility and its associated equipment designed to provide a particular type of communications service. For example, in FIG. 1 trunk groups 104 through 106 are respectively assigned to provide Accunet® digital communications service, Megacomm®, and Megacomm 800® telecommunications services. To provide a satisfactory level of communications service, the number of trunk circuits in each trunk group is determined based on studies of expected busy-hour or worse case usage for each communications service. Such studies are expensive, prone to error, must be frequently repeated as communications service demands change over time, and often result in overequipping the PBX.

FIG. 2 shows an ISDN call-by-call environment wherein communications devices 102-1 through 102-N are connected through a PBX 201, which incorporates the present invention, to external communications network 103 using one of the call-by-call (CBC) trunk groups 202-1 through 202-N. Each of the CBC trunk groups provides a variety of communications services, such as Accunet®, Megacomm®, and Megacomm 800®, respectively provided by trunk groups 104-106 in FIG. 1. The identification of the particular communications service associated with each call is exchanged between the PBX and the external communications network on a call-by-call basis, i.e., each call provides an identification of the communications service requested. It should be noted that such identification was not required in the prior art as the communications service associated with a call was determined by the trunk group on which the call was routed. The call-by-call arrangement of FIG. 2 typically saves trunk resources as the maximum usage of one communications service usually does not coincide in time with the maximum usage of another communications service. Accordingly, trunk resources can be shared by different communications services and the total number of such resources is reduced. However, as trunk resources are shared between a plurality of communications services, a surge in the demand for one service can result in blocking any access to the other communications services. The present invention addresses this problem by allowing a communications system administrator to logically allocate trunk resources to each of a plurality of communications services when such resources are in a trunk group shared by the plurality of communications services. In the disclosed embodiment, the logical allocation allows the specification of a minimum and maximum number of resources to be assigned for each communications service. The system then allocates resources for a requested communications service so long as the maximum allocation for that service is not exceeded and the minimum allocation for all other communications services is maintained.

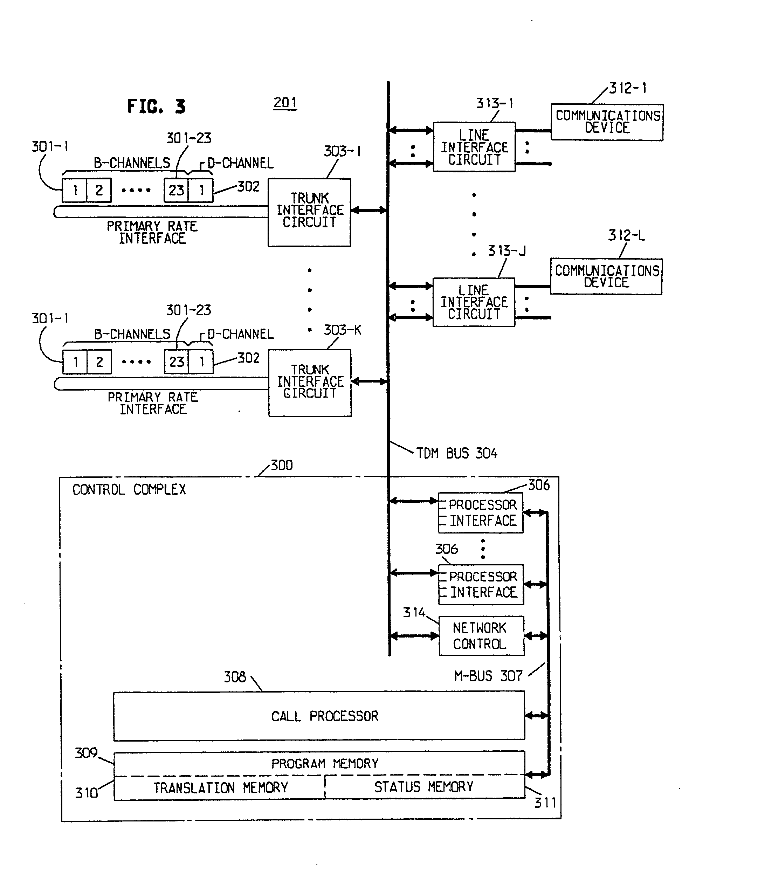

Turn now to FIG. 3 which shows a block-schematic diagram of PBX 201. In accordance with the present invention, control complex 300 in PBX 201 allocates trunk resources which, in this illustrative application, are time intervals or channels in a time-division multiplexed communications signal carried by a communications facility and its associated equipment extending from PBX 201 to external communications network 103. These channel allocations are made for two types of communications. The first type is for communications incoming to PBX 201 which originate from and/or tandem through external communications network 103 and arrive at the PBX over a CBC trunk group. The second type is for outgoing communications which originate from and/or tandem through the PBX and are coupled to the network over a CBC trunk group.

In ISDN, a trunk group is a logical collection of one or more of the Bearer Channels (B-Channels) 301-1 to 301-23. Each B-Channel is associated with a primary Data Channel (D-Channel) 302 which carries signaling information for one or more B-Channels. A physical aggregation of twenty-three B-Channels, designated as B-Channels 301-1 through 301-23, and one D-Channel, designated as 302, is connected to time-division multiplex (TDM) bus 304 via one of the trunk interface circuits 303-1 through 303-K.

It should be noted that since a trunk group is a logical collection of B-Channels, such B-Channels are

3

not physically constrained to one of the trunk interface circuits 303-1 through 303-K. Therefore, the B-Channels in an ISDN trunk group may terminate on one or more trunk interface circuits. Moreover, the D-Channel associated with any trunk group is also not physically constrained and can terminate on any appropriate trunk interface circuit regardless of whether this trunk interface circuit terminates any of the B-Channels associated with this D-Channel.

Control of each B-Channel in the PBX is provided by standardized messages coupled by the associated D-Channel. One of these messages, referred to as a SETUP message, provides specific information relating to a requested use of a B-Channel and includes the called party number, an identification of which one of the B-Channels that is being requested, and the type of communications service that is being requested on the specified B-Channel.

For incoming communications, the SETUP message is sent over a D-Channel and is coupled through one of the trunk interface circuits to the TDM bus. Bus 304 carries the SETUP message to one of the processor interface circuits 306. Each circuit 306 contains specific logic to terminate layer two of the ISDN protocol and couples the SETUP message via memory bus (M-BUS) 307 to call processor 308. The necessary instructions are stored in program memory 309 and executed by call processor 308.

In the disclosed embodiment, the present invention is accomplished using a sequence of operations that are part of the program memory 309. These operations determine whether or not a B-Channel is to be allocated for each incoming communications based on an administered predetermined resource allocation plan which is stored in translation memory 310. Each determination is a function of the status of other communications maintained in status memory 311 and the type of communications service requested in the SETUP message. If the requests specified in the SETUP message are accepted, the specified B-Channel is allocated for the requested communications service. In addition, an appropriate ISDN message is returned by the PBX through a D-Channel to the external communications network which, in response thereto, subsequently couples the digital information associated with the requested communications service on the specified B-Channel. If, however, channel and communications service requests in the SETUP message for the called party are to be denied, an appropriate ISDN message is returned by the PBX over the D-Channel to the external communications network and no B-Channel is allocated for communications service requested in the denied SETUP message.

Outgoing communications can originate from one of the communications devices 312-1 through 312-L and the dialed digits from such devices are coupled through one of the line interface circuits 313-1 through 313-J to the TDM bus and thence to network control 314 and on to call processor 308. Within the call processor, the dialed digits are analyzed and, based on a predetermined call routing scheme, a trunk group is identified. Pursuant to the present invention, if the identified trunk group is a CBC trunk group, a communications service is also identified. Once these identifications are made, the sequence of operations stored in program memory 309 are executed to determine if a B-Channel is allocated within the identified trunk group and communications service. The outcome of these operations, as with incoming communications, is a function of the predetermined resource allocation plan stored in the translation memory, the status of other communications maintained in status memory 311, and the type of communications service requested. If a B-Channel is allocated, the call processor generates an ISDN SETUP message which is coupled to external communications network 103 and the information associated with this communications is subsequently coupled through the PBX. This ISDN SETUP message, which includes the same information as described for an incoming communications, is coupled through a D-channel via one of the processor interface circuits 306, the TDM bus 304 and one of the trunk interface circuits 303-1 through 303-K. It should, of course, be understood that PBX 201 may incorporate an alternate route selection scheme wherein any outgoing communications may be routed through a trunk group and/or communications service that is different from that originally identified from the dialed digit analysis. If such a trunk group is a CBC trunk group, then the previously described process of determining the allocation or denial of a B-Channel is performed. If no such alternate route is identified, or if alternate route selection is not available or is not successful, then either a busy signal is returned to the communications device or a signal indicating that the outgoing call has been queued until the availability of the identified trunk group and communications service is returned to the communications device from which the dialed digits originated.

An outgoing communications may not always originate from one of the communications devices 312-1 through 312-L. Indeed, calls may be coupled from external communications network 103 through one or more intermediate PBXs to a designated one of communications devices 312-1 through 312-L on another PBX (not shown). This designated communications device is referred to as the "called" communications device. Such outgoing communications from eternal communications network 103 through one or more intermediate PBXs are referred to as tandem communications and are also allocated B-Channels as previously described.

**EP 0 413 490 A2**

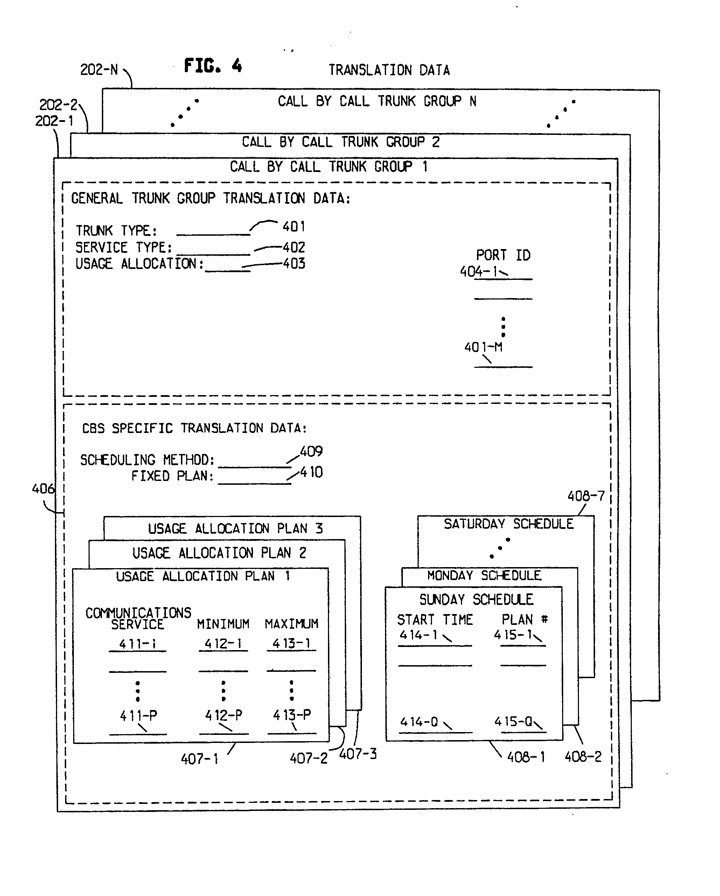

Turn now to FIG. 4 which provides a detailed description of the translation memory 310 of FIG. 3. Translation memory refers to the logical partition of memory that is used to store a collection of data that is entered by a system administrator to control specific aspects of the PBX. Translation data remains fixed unless explicitly changed by a system administrator. The translation data used by this invention is associated with one of the call-by-call trunk groups 202-1 through 202-N. Each trunk group has a collection of general trunk group attributes that describes the overall characteristics of the trunk group. These include "trunk group type" 401, "service type" 402, and "usage allocation" 403. In the disclosed embodiment, "trunk group type" 401 must be "ISDN PRIMARY RATE INTERFACE" (ISDN PRI) and "service type" 402 must be "call-by-call" and "usage allocation" 403 must be "yes" indicating that resource allocation control is in effect for the resource allocation scheme to operate. Each ISDN PRI trunk group also contains a list of "Port IDs" 404-1 through 404-M which identify the B-Channels in each trunk group.

The translation data also includes "Call-By-Call Specific Translation Data" 406. As shown, the Call-By-Call Specific Attributes contain three usage allocation plans, 407-1 through 407-3, seven daily transition schedules, 408-1 through 408-7, a scheduling method, 409, and a fixed plan, 410. For each CBC trunk group, at any given time, the resource allocation strategy is controlled by a single usage allocation plan, 407-1 or 407-2 or 407-3. Each usage allocation plan controls the resource allocation of a trunk group and specifies for each of the communications services 411-1 through 411-P, (e.g., Megacomm®, Accunet®, etc.), a minimum number of channels, 412-1 through 412-P, that are respectively reserved for each communications service, and a maximum number of channels, 413-1 through 413-P, that each communications service can utilize at any given time. Within a usage allocation plan, a given communications service can appear only once. In addition, any one of the designations 411-1 through 411-P can be designated "other" to refer to a plurality of communications services. This allows the system administrator to specify a maximum and minimum for an aggregation of communications services not explicitly specified in a communications plan.

The specification of minimums and maximums for any usage allocation plan, in accordance with the present invention, must obey a number of relationships. For one,

$$\text{Min}_{cs_i} \leq \text{Max}_{cs_i} \qquad\qquad (1)$$

where

$$\text{Min}_{cs_i}$$

is the minimum specified for the $i^{th}$ communications service ($cs_i$), and

$$\text{Max}_{cs_i}$$

is the maximum specified for the $i^{th}$ communications service. Equation (1) merely states that the specified minimum for any communications service, by definition, must be equal to or less than the specified maximum for that communications service. In addition,

$$\text{Max}_{cs_i} \leq T \qquad\qquad (2)$$

where T is the total number of Port IDs 401-1 through 401-M in the trunk group covered by the usage allocation plan. Equation (2) states that the specified maximum for any communications service cannot exceed the total number of Port IDs or B-Channels in the trunk group being allocated. It also follows that

5

$$\sum_{i=1}^{P} Min_{cs_i} \leq T \qquad (3)$$

and

$$RES = \sum_{i=1}^{P} Min_{cs_i} \qquad (4)$$

where RES or

$$\sum_{i=1}^{P} Min_{cs_i} \cdot$$

is the sum of the minimums specified for all P communications services being allocated. In other words, RES is the total number of resources being reserved and the total number of such reserved resources cannot exceed the total number of resources in the trunk group. Finally, let

$$FP = T - \sum_{i=1}^{P} Min_{cs_i} \text{ and, therefore} \qquad (5)$$

$$Max_{cs_i} - Min_{cs_i} \leq FP \text{ for each } i^{th} \text{ communication service} \qquad (6)$$

where FP is the free pool which is defined as the number of resources that have not been reserved for specific communications services and, therefore, may be shared pursuant to the administered usage allocation plan.

Each trunk group contains multiple usage allocation plans to allow different plans to be in effect during different times of the day and/or during different days of the week.

Two methods are available for specifying which usage allocation plan is in effect. If the "scheduling method" 409 is administered as "fixed", then the usage allocation plan number specified in "fixed plan" 410 is in effect at all times. If, however, the "scheduling method" 409 is administered as "scheduled", the "daily transition schedules" 408-1 through 408-7 are used to determine which usage allocation plan is currently in effect. When the "scheduling method" 409 is administered as "scheduled", at least one entry must be administered for at least one day.

Each of transition schedules 408-1 through 408-7 represents a specific days of the week, Sunday through Saturday, and contains zero or more "start times" 414-1 through 414-Q and "plan number" 415-1 through 415-Q. Each entry specifies the day and time that the corresponding plan is to be made the current plan.

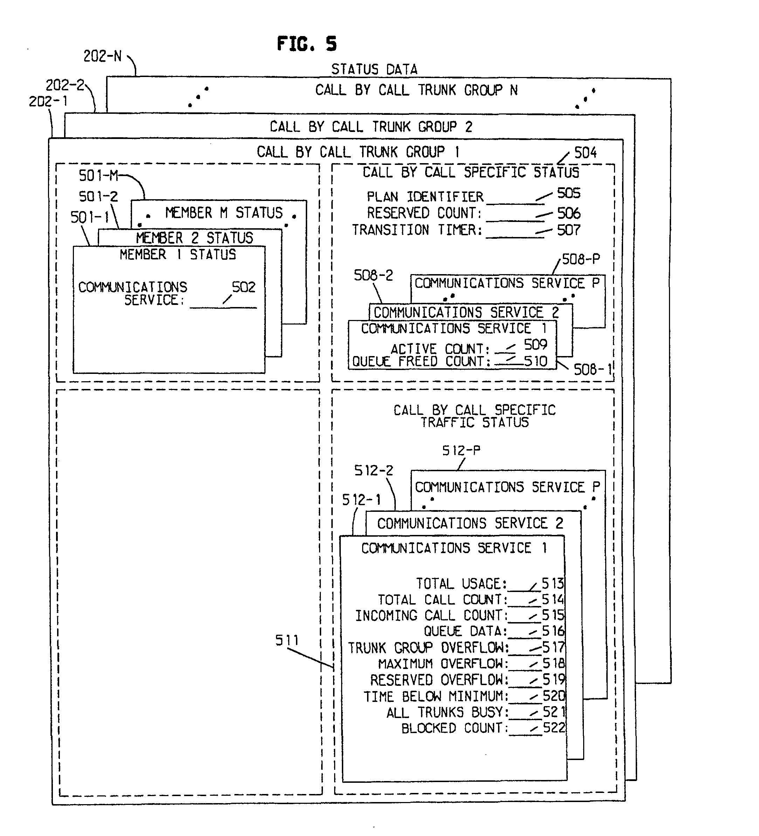

Before turning to FIG. 5, it is helpful to understand the interaction between the present invention and an existing PBX feature known as Outgoing Trunk Queueing (OTQ) which is used with Automatic Route Selection (ARS) and Automatic Alternate Routing (AAR). In a PBX incorporating ARS and/or AAR, when a user originates a call, the PBX attempts to route the call by sequentially searching for an available communications facility in one of a plurality of trunk groups. The search proceeds through each of the trunk groups on an ordered basis, i.e., the trunk groups are searched for an available communications facility based on some ordered list of trunk groups arranged according to routing preferences. If no communications facilities are currently available for any trunk group in the ordered list, the call may be queued until communications facilities are available in the first trunk group in the ordered list of routing preferences. Note that a call will only be queued if the associated trunk group has been administered to allow OTQ, has queue slots available, the caller is allowed to access the OTQ feature, and the caller has not exceeded their maximum number of OTQ calls. Once a communications facility is made available, an attempt will be made to service the call at the head of the queue. This means that the PBX will originate a special "callback" call to the calling party indicating that the trunk resource is now available. This call is now considered "queue freed". Once the calling party answers the special callback call, the previously dialed ARS or AAR call is automatically placed by the PBX and the call is completely removed from the queue. Note that if during the time the callback call is unanswered (i.e., still ringing), another PBX user's attempt to access the recently freed communications facility will be blocked. On the other hand, an incoming call will be allowed to access the recently freed communications facility. As such, if and when the callback call is answered, the call will be requeued at the head of the queue since the communications facility is still available.

While the present invention functions with the existing OTQ operation, there are several differences. First, a call may be rejected and hence queued even when communications facilities are available. This is because a usage allocation plan may be limiting the utilization of a given communications service or because all available communications facilities have been reserved for other communications services. Second, when a call is queued, it is queued pending the availability of the specified communications service. Lastly, since the availability of a resource for one communications service may occur prior to some other communications service, the queue is not serviced in a strict first-in, first-out order.

Turn now to FIG. 5 which provides a detailed description of the status memory 311 shown in FIG. 3. Status memory refers to the logical partition of memory that is used to store transient information that reflects the current state of the PBX. For example, status data is effected by new call attempts, call completions, and schedule transitions.

The status data is maintained in the disclosed embodiment in addition to existing status data maintained for each CBC trunk group 202-1 through 202-N. Each member or B-Channel of a CBC trunk group has associated with it member-specific status information 501-1 through 501-M. In addition, this member-specific status information is enhanced to record, for the duration of a call, the communications service requested at the call establishment time. The requested communications service is designated as 502 in the member-specific status information. Additionally, for each CBC trunk group, a new collection of Call-By-Call specific status information 504 is maintained. This specific status information includes "plan identifier" 505, which specifies the index of the current usage allocation plan. As described with FIG. 4, this value is based on the translated scheduling method 409 and either the fixed plan 410 or the appropriate transition schedule 408-1 through 408-7. For the current plan, "reserved count" 506 records the number of reserved channels (i.e., the sum of the minimums). Recognize that this value is directly derivable from translation data 412-1 through 412-P but is computed as part of status data for subsequent computational efficiency. If the current scheduling method as specified in 409 is scheduled, the "transition timer" 507 maintains a timer key for the next administered plan change.

Status data 508-1 through 508-P is also maintained for each communications service in the current usage allocation plan. This status data includes a count of the number of active calls using this service, designated as 509, as well as a count of the number of calls requesting this service that are in the queue freed state which is designated as 510. Finally, it should be noted that in the illustrative implementation, the PBX provides traffic measurements to monitor the effectiveness of each usage allocation plan. These measurements, which are accessible by the system administrator, are separately maintained for each call-by-call trunk group 202-1 through 202-N as part of call-by-call specific traffic status data 511 and report on activity for each communications service included in the current usage allocation plan, 512-1 through 512-P. The status data needed to produce these call-by-call traffic reports includes for each measurement period (e.g., typically 1 hour) "total usage" 513, which reflects the total time that calls using this communications service were active; "total call count" 514, which reflects a count of the number of calls using this communications service (both incoming and outing calls); "incoming call count" 515 which reflects a count of the number of incoming calls using this service; "queue data" 516 which reflects the number of calls requesting this service that were queued and successfully serviced; "trunk group overflow" 517 which reflects a count of the number of call attempts that were either rejected or queued because no communications facilities were available in this trunk group; "maximum overflow" 518 which reflects a count of the number of call attempts that were either rejected or queued because this communications service was already at its administered maximum; "reserved overflow" 519 which reflects a count of the number of call attempts that were either rejected or queued because this communications service was above its administered minimum and all other available resources are reserved for other communications services; "time below minimum" 520 which reflects the percentage of time that the number of active calls for this communications service is below the administered minimum; "all trunks busy" 521 which reflects the percentage of time that the number of active calls for this communications service is equal to the administered maximum; and, finally, "blocked count" 522 which reflects the number of calls that are rejected and not successfully queued or queued and not successfully serviced from the queue.

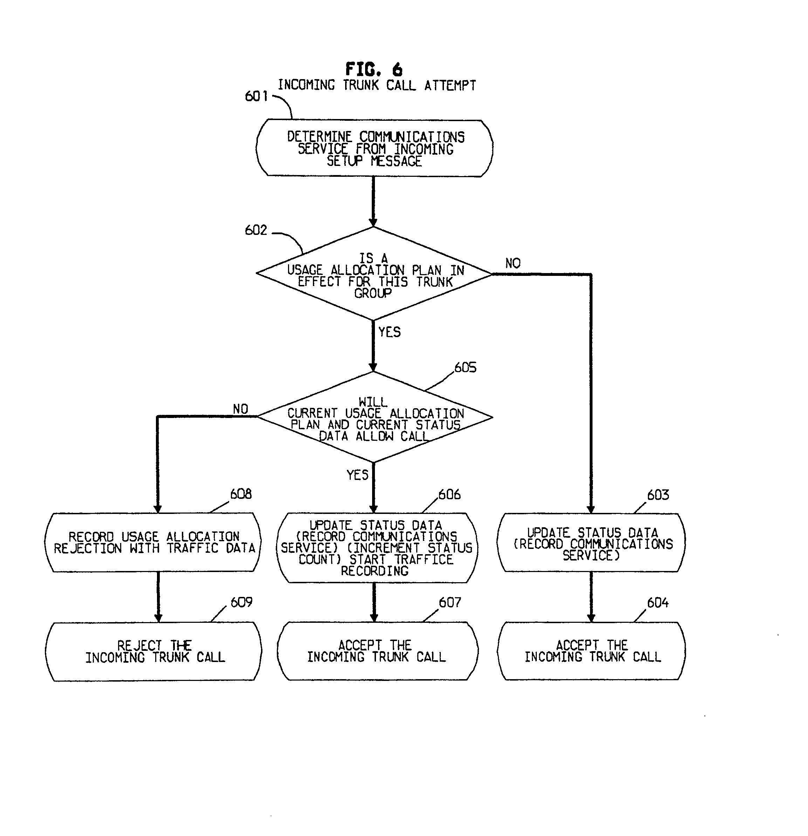

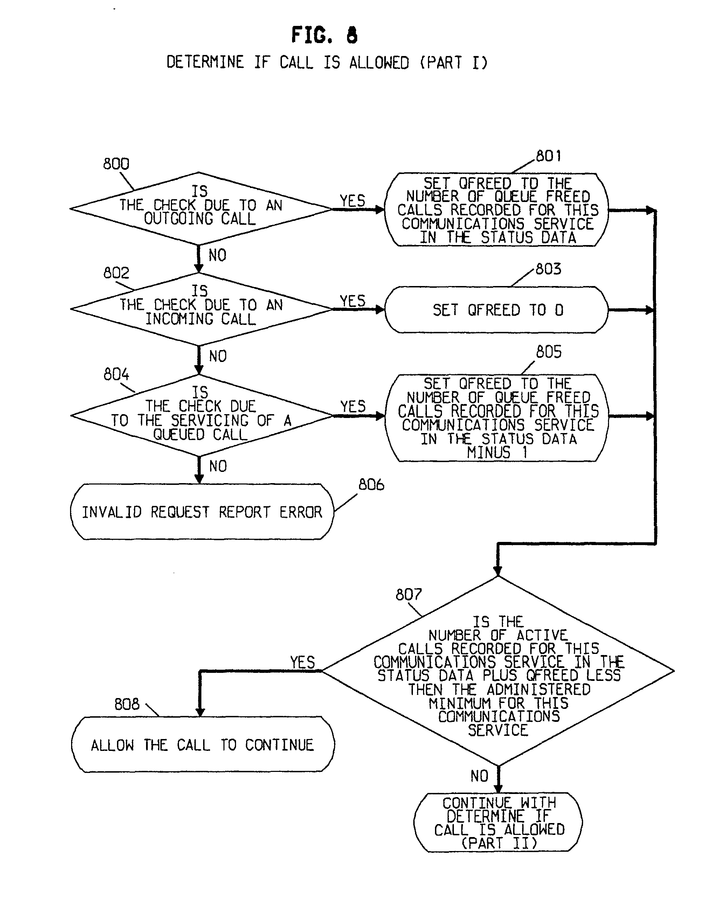

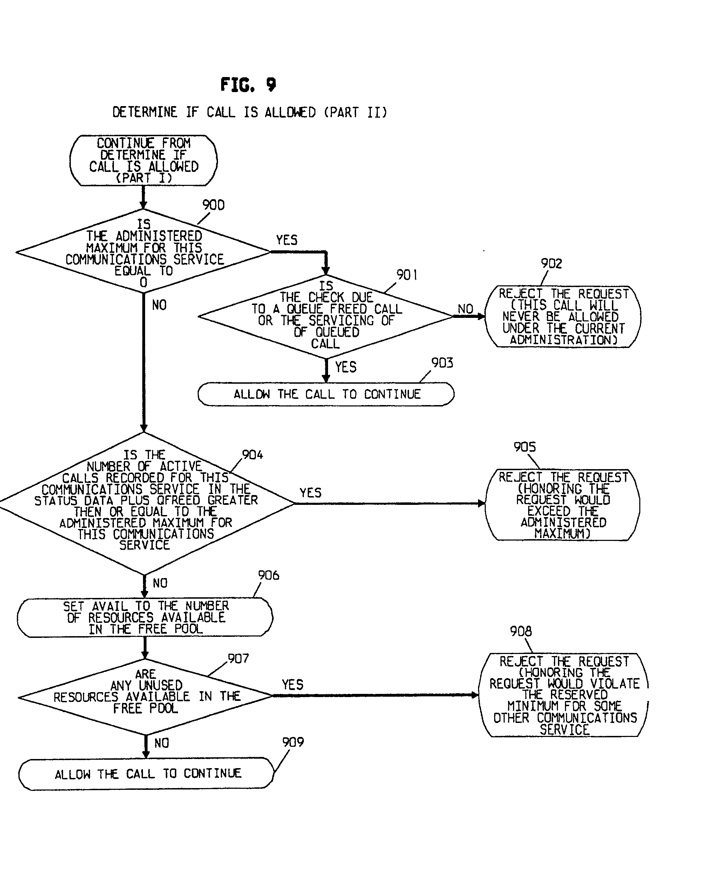

Turn now to FIG. 6 which begins a detailed description of the program memory 309 shown in FIG. 3. This description focuses on the operations needed to implement the call-by-call resource allocation strategy. FIG. 6 presents the sequence of steps that occurs when the PBX determines that an incoming call has been received on a CBC trunk group. At step 601, the communications service is extracted from the incoming ISDN PRI SETUP message. At step 602, the usage allocation translation data 403 is checked to see if resource allocation control is in effect. If this value is set to no, at step 603 the communications service determined in step 601 is recorded as part of trunk member status data 502. This allows determination of correct initial conditions if a usage allocation plan is subsequently put into effect. After updating the status data, the call is accepted at step 604. If, on the other hand, at step 602, translation data indicates that a usage allocation plan is in effect, step 605 determines if the call can be accepted in view of the requested communications service, the current usage allocation plan and the current status data. The details of this determination are given in FIGs. 8 and 9.

If the resource allocation check indicates that the call may proceed, at step 606, the communications service determined in step 601 is recorded as part of trunk member status data 502. Additionally, the active count status data 509 for the requested communications service is incremented by 1. Finally, applicable traffic status counts 513 through 522 are adjusted. Once all necessary status data has been updated, the incoming trunk call is accepted at step 607.

If, however, it is determined at step 605 that, based on the requested communications service, the current usage allocation plan and the current status data that the call should be rejected, appropriate traffic rejection status data is updated at step 608. And, finally, at step 609 the incoming trunk call is rejected.

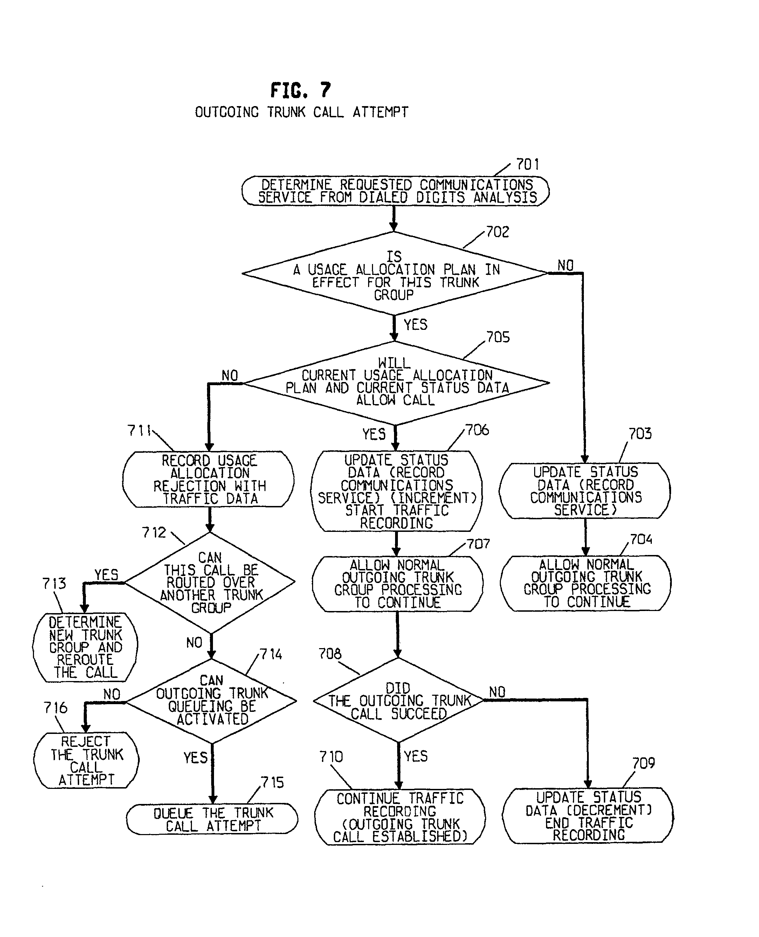

FIG. 7 provides a similar, high-level flow for an outgoing trunk call attempt. Based on an analysis of the dialed digits, e.g., using AAR and/or ARS, the desired communications service for this outgoing call attempt is determined at step 701. At step 702, the usage allocation translation data 403 is checked to see if resource allocation control is in effect. If this value is set to no, at step 703 the communications service determined in step 701 is recorded as part of trunk member status data 502 and normal outgoing trunk processing continues in step 704. This recordation allows determination of correct initial conditions if a usage allocation plan is subsequently put into effect. If, on the other hand, at step 702, translation data indicates that a usage allocation plan is in effect, step 705 determines if, based on the desired communications service, the current usage allocation plan and the current status data, the call can be accepted. The details of this determination are given in FIGs. 8 and 9. If the resource allocation check indicates that the call may proceed, at step 706, the communication service determined in step 701 is recorded as part of trunk member status data 502. Additionally, the active count status data, 509, for the requested communications service is incremented by 1. Finally, applicable traffic status counts 513 through 522 are adjusted. Once all necessary status data has been updated, the outgoing trunk call proceeds at step 707.

At step 708 a check is made to see if the outgoing trunk call succeeded. If the call failed, at step 709 the active count status data, 509, for the requested communications service is decremented by 1. Additionally, traffic measurements for this call are completed. Conversely, if at step 708 it is determined that the outgoing trunk call succeeded, at step 710 additional traffic measurements are recorded and the outgoing trunk call is established.

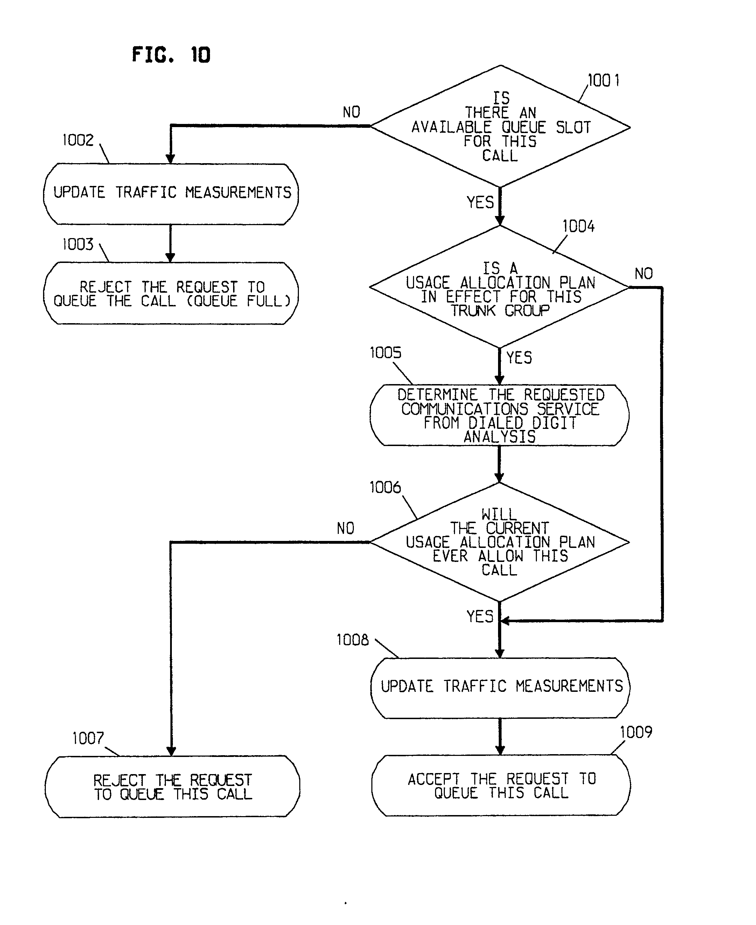

If, at step 705, it is determined that, based on the desired communications service, the current usage allocation plan and the current status data that the call should be rejected, appropriate traffic rejection status data is updated at step 711. Step 712 provides a check to determine if, based on AAR and/or ARS algorithms, this call can be routed over another trunk group. If this can occur, at step 713 an attempt is made to re-route the call. If, however, at step 712 it is determined that no alternate routes are available, a check is made at step 714 to see if this call can be queued as part of the Outgoing Trunk Queueing feature. FIG. 10 provides details for determining if a call can be queued. If this check at step 714 indicates that the call can be queued, the call will be queued in step 715. Conversely, if at step 714 it is determined that the call can not be queued, the outgoing trunk attempt is rejected in step 716.

FIGs. 8 and 9 provide a yes/no answer that specifies if a call can procced based on the requested communications service, the current usage allocation plan, and the current status data. In FIGs. 8 and 9, QFREED is a variable that reflects the number of queue freed calls that are taken into account for a given call scenario. That is, at step 800 if the current call scenario is an outgoing call, at step 801 QFREED is set to the number of queue freed calls recorded in the status data for the specified communications service and designated as 510 in FIG. 5. In effect, this treats queue freed calls as if they were already active. This then prevents a new outgoing call from using a resource that has been offered to a queue freed call.

It it is determined at step 802 that the current call scenario is an incoming call, QFREED is set to 0 at step 803. In effect, this ignores queue freed calls. This then allows an incoming call to have precedence over a resource that has been offered to a queue freed call. At step 804, if the current call scenario is the servicing of a queue call, at step 805, QFREED is set to 1 less than the number of queue freed calls recorded in the status data for the specified communications service and designated as 510 in FIG. 5. In effect, this treats queue freed calls as if they were already active. The reason a 1 is subtracted is to compensate for the dequeueing of the current call. As with the outgoing call, this then prevents a new outgoing call from using a resource that has been offered to a queue freed call.

If step 806 is ever reached, an error has been detected. The usage allocation algorithm should only be applied to outgoing, incoming, and the servicing of queued calls.

At step 807 if the number of active calls recorded for this communications service status data, and designated as 509 in FIG. 5, plus the previously computed value for QFREED is less than the administered minimum for this communications service, and designated as 412 in FIG. 4, the call can continue as shown in step 808. That is, the call is using one of this service's reserved channels and interactions with other communications services are not applicable.

If, at step 807, it is not yet determined if the call is allowed, the algorithm continues with FIG. 9, step 900. At step 900, a check is made to determine if the administered maximum for the specified service, and designated as 413 in FIG. 5, is equal to 0. Note that when "other" is part of a usage allocation plan, a maximum of 0 provides a means of blocking a given communications service. When the administered maximum is 0, a check is made at step 901 to determine if the current call scenario is for servicing a queued call. If the current call scenario is not for servicing a queued call, the call request is rejected at step 902. This call will never be allowed by the current usage allocation plan. Conversely, if the current call scenario is for servicing a queued call, the call is allowed at step 903. This call is allowed because the call must have been queued while a different usage allocation plan was in effect and if the call is not released from the queue, it has the potential of never being serviced.

If, at step 900, it is determined that the maximum for the specified communications service is greater than 0, then at step 904 a check is made to determine if the number of active calls for the specified communications service plus QFREED is greater than or equal to this service's administered maximum. If this is true, allowing this call would exceed the administered maximum and the call is rejected at step 905. If this computed value is less than the administered maximum, step 906 determines the number of resources available in the free pool. To determine the number of resources available in the free pool, two cases must be considered. First, if the call scenario is for an incoming call, then the number of resources available in the free pool is FP minus the sum for each communications service the number of active calls, 509, greater than the administered minimum, 412. Second, if the call scenario is for an outgoing call or the servicing of a queued call, then the number of resources available in the free pool is FP minus the sum for each communications service the number of active calls, 509, plus the number of queue freed calls, 510, greater than the administered minimum, 412.

At step 907 a check is made to determine if the number of available resources in the free pool is less than or equal to 0. If so, at step 908 the call is rejected. Allowing the call to continue would violate the reserved minimum for some other communications service. Conversely, if the number of available resources in the free pool is greater than 0, the call is allowed at step 909.

FIG. 10 provides a yes/no answer that specifies if an attempt to queue an outgoing trunk call on a CBC trunk group can be accepted. This sequence of steps is a detailed explanation of step 714. At step 1001, a check is made to determine if there are any available queue slots for this trunk group. If no slots are available, at step 1002, appropriate traffic measurements, 513 through 522, are updated and the queue attempt is rejected at step 1003. If, however, queue slots are available, at step 1004, the usage allocation translation data 403 is checked to see if resource allocation control is in effect. If this value is set to yes, at step 1005, the requested communications service is determined from an analysis of the dialed digits. At step 1006, a check is made to determine if the call will ever be allowed under the current usage allocation plan. That is, a check is made to see if the requested communication service's maximum, 413, is a greater than 0. If the usage allocation check indicates that the call can never be queued, e.g., the specified maximum for the communications service is equal to zero, the request to queue the call is rejected at step 1007. Conversely, if from step 1004, it is determined that no usage allocation plan is in effect, from step 1006, it is determined that this call could be allowed under the current usage allocation plan, e.g., the specified maximum for the communications service is greater than zero, appropriate traffic measurements 513 through 522 are updated at step 1008 and the request to queue the call is accepted at step 1009.

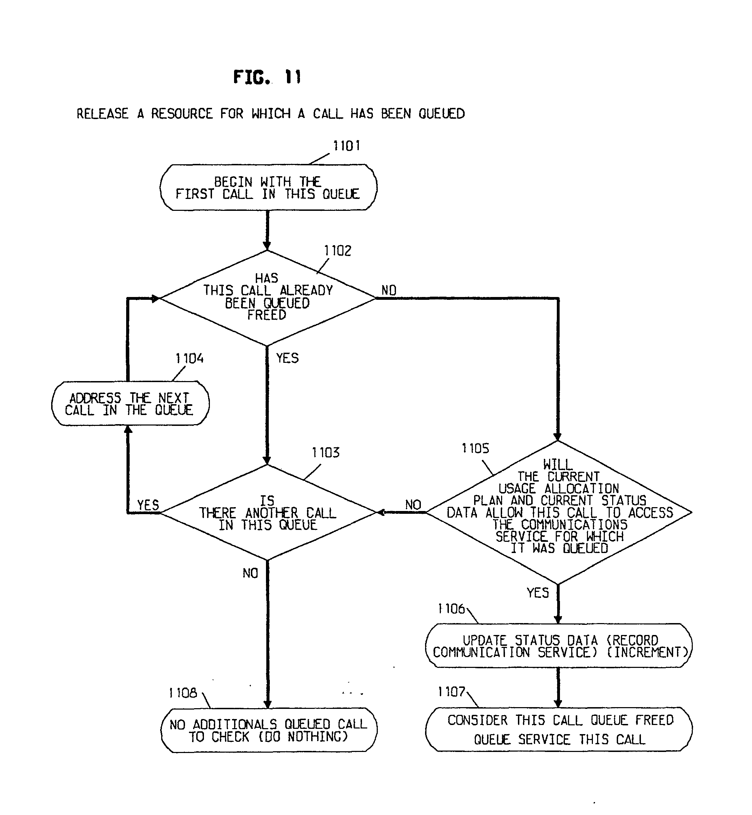

As presented in FIG. 11, whenever an incoming or outgoing trunk call is terminated, an attempt is made to service any calls that are in the associated trunk group's queue. If the queue is non-empty, at step 1101, the head of the queue is accessed. At step 1102, a check is made to see if this call has already been queue freed. If the current call has been queue freed, at step 1103, a check is made to see if there are any additional calls in the queue. If the end of the queue has not been reached, the next entry is addressed at step 1104 and step 1102 is then repeated with this new entry. If, at step 1102, an entry is found that is not currently queue freed, step 1105 determines if the call can be queue freed in view of the requested communications service, the current usage allocation plan and the current status data. The details of this determination are given in FIGs. 8 and 9. It should be noted at this juncture that the termination of a call on a first communications service may result in a call requesting a second communications service different from the first to be queue freed. This can arise when the call requesting the second communications service is placed in the queue not because this second communications service has exceeded its maximum allocation but because the allocation of the call to the second communications service would not maintain the specified minimum allocation for the first communications service. In any event, if the call can be queue freed, the queue freed status count 510 is incremented by 1 at step 1106 and the call is considered queue freed at step 1107.

As previously described, the PBX generates a special "callback" call to the calling party alerting them that the allocation of a trunk for the communication service is now available. When the calling party answers the special "callback" call, the call is removed from the trunk group's queue and the appropriate queue freed count is decremented by 1. At this point, processing resumes with the outgoing trunk call sequence described in FIG. 7.

If, at step 1105, it is determined that the current call cannot be queue freed, a check is made to step 1103 to see if there is another call in the queue. Steps 1104, 1102, 1105 and 1103 continue until a call is successfully queue freed or until step 1108 is reached when the queue is exhausted.

It should, of course, be noted that while the present invention has been described in terms of an illustrative embodiment, other arrangements will be apparent to those of ordinary skill in the art.

First, for example, while the present invention has been disclosed for the allocation of PBX trunk resources in an ISDN environment, the present invention is applicable to the allocation of other telecommunications resources. Indeed, the present invention is applicable to virtually any resource allocation application. Second, the specification of a maximum and a minimum for each communications service or resource use can be adjusted to provide a variety of needs. For example, the maximum and minimum for any resource use can be set to zero to block any resource allocation to that use. Or, the setting of the minimum and maximum for each resource use respectively to 0 and T is equivalent having no resource allocation plan in effect. Or, the setting of the maximum equal to its associated minimum and the setting of the sum of all minimums equal to T is equivalent to maintaining a separate portion of the resources for each resource use. Finally, while in the disclosed embodiment each request for a resource was for a single resource, each request could be for a plurality of resources.

## Claims

1. Apparatus for controlling the allocation of a plurality of resources to a plurality of different resource uses, said apparatus
CHARACTERIZED BY
means (308, 309, 310, 601 or 308, 309, 310, 701) for receiving requests for allocation of resources to any particular one of said resource uses; and
means (308, 309, 310, 605 or 308, 309, 310, 705 or 308, 309, 310, 1105) responsive to each of said received requests for granting that request if the requested allocation when combined with resources already allocated to said particular said resource use does not exceed a predetermined maximum number of allocated resources associated with said particular resource use and if the allocation of said resource to said particular resource use maintains a predetermined minimum number of reserved resources associated with at least one other resource use.

2. The apparatus of claim 1 further including means (407-1, 407-2, 407-3) for storing said predetermined maximum number of allocated resources and said predetermined minimum number of reserved resources respectively for said particular and said at least one other resource use.

3. The apparatus of claim 1 wherein said predetermined maximum number for said particular resource use can be any number whose value is at least zero.

4. The apparatus of claim 1 wherein said predetermined minimum number of reserved resources for each of said at least one other resource use is an associated number whose value is at least zero.

5. The apparatus of claim 1 wherein said predetermined maximum number of allocated resources and said predetermined minimum number of reserved resources used by said granting means varies with time.

6. The apparatus of claim 1 wherein said granting means includes means (712) for allocating alternate resources other than those requested by said received requests which are denied by said granting means.

7. The apparatus of claim 6 wherein said alternate resource allocating means allocates said alternate resources in accordance with a predetermined order.

8. The apparatus of claim 1 wherein said granting means (606 and 608 or 706 and 711) maintains a tally of those received requests which were granted and those which were denied.

9. The apparatus of claim 1 further including means (714) for placing received requests into a queue for which allocations are not initially granted by said granting means.

10. The apparatus of claim 9 wherein said granting means (1101) examines said queued requests to determine if any can be later granted an allocation of resources.

11. The apparatus of claim 1 wherein each received request requests that at least one resource be allocated to said particular resource use.

12. A method of controlling the allocation of a plurality of resources to a plurality of different resource use, said method

CHARACTERIZED BY

the steps of

receiving requests for resources from a particular resource use; and

granting each of said requests if the requested allocation in that request when combined with resources already allocated to said particular resource use does not exceed a predetermined maximum number of allocated resources associated with said particular resource use and if the allocation of said resource to said particular resource use maintains a predetermined minimum number of reserved resources associated with at least one other resource use.

13. Apparatus for allocating trunk resources in a communications system to a plurality of communications services, said trunk resources interconnecting said communications system to an external communications network, said apparatus

CHARACTERIZED BY

means (308, 309, 310, 601 or 308, 309, 310, 701) for receiving requests for allocating trunk resources to said communications services, each request requesting an allocation of at least one trunk resource to any particular one of said communications services; and

means (308, 309, 310, 605 or 308, 309, 310, 705 or 308, 309, 310, 1105) responsive to each of said received requests for granting the requested allocation for said particular communications service if said requested allocation when combined with trunk resources already allocated to said particular communications service does not exceed a predetermined maximum number of allocated trunk resources associated with said particular communication service and if the allocation of said trunk resource to said associated communications service maintains a predetermined minimum number of reserved trunk resources associated with at least one other communications service.

14. The apparatus of claim 13 further including means (407-1, 407-2, 407-3) for storing said predetermined maximum number of allocated trunk resources and said predetermined minimum number of reserved trunk resources respectively for said particular and said at least one other communications service.

15. The apparatus of claim 13 wherein said predetermined maximum number of trunk resources respectively for said particular and said at least one other communications service can be any number whose value is at least zero.

16. The apparatus of claim 13 wherein said predetermined minimum number of reserved trunk resources for each of said one other communications service is an associated number whose value is at least zero.

17. The apparatus of claim 13 wherein said predetermined maximum number of trunk resources and said predetermined minimum number of reserved trunk resources used by said granting means varies with time.

18. The apparatus of claim 13 wherein said granting means includes means (712) for allocating alternate trunk resources other than those requested by said received requests which are denied by said granting means.

19. The apparatus of claim 18 wherein said alternate resource allocating means allocates said alternate trunk resources in accordance with a predetermined order.

20. The apparatus of claim 13 wherein said granting means (606 and 608 or 706 and 711) maintains a tally of those received requests which were granted and those which were denied.

21. The apparatus of claim 13 further including means (714) for placing received requests into a queue for which allocations are not initially granted by said granting means.

22. The apparatus of claim 21 wherein said granting means (1101) examines said queued requests to determine if any can be later granted an allocation of trunk resources.

23. A method of allocating trunk resources in a communications system to a plurality of communications services, said trunk resources interconnecting said communications system to an external communications network, said method

CHARACTERIZED BY

the steps of receiving requests for allocating trunk resources to said communications services, each request requesting the allocation of at least one trunk resource to any particular one of said communications services; and granting the requested allocation for said associated communications service, in response to each of said received requests, if said requested allocation when combined with trunk resources already allocated to said particular communications service does not exceed a predetermined maximum number of allocated trunk resources associated with said particular communications service and if the allocation of said trunk resource to said associated communications service maintains a predetermined minimum number of reserved trunk resources associated with at least one other communications service.

## FIG. 1

PRIOR ART    <u>100</u>

102-1

COMMUNICATION
DEVICE

101

MEGACOM® 800
TELECOMMUNICATIONS
SERVICE TRUNK GROUP

106

103

PBX

MEGACOM®
TELECOMMUNICATIONS
SERVICE TRUNK GROUP

EXTERNAL
COMMUNICATIONS
NETWORK

105

102-N

COMMUNICATION
DEVICE

ACCUNET®
DIGITAL SERVICES
TRUNK GROUP

104

## FIG. 2

<u>200</u>

102-1

COMMUNICATION
DEVICE

201

202-1

CALL BY CALL TRUNK GROUP

ACCUNET® DIGITAL SERVICES,

MEGACOM®
TELECOMMUNICATIONS SERVICE,

MEGACOM® 800
TELECOMMUNICATIONS SERVICE

103

202-2

CALL BY CALL TRUNK GROUP

ACCUNET® DIGITAL SERVICES,

MEGACOM®
TELECOMMUNICATIONS SERVICE,

MEGACOM® 800
TELECOMMUNICATIONS SERVICE

PBX

EXTERNAL
COMMUNICATIONS
NETWORK

202-N

ACCUNET® DIGITAL SERVICES,

MEGACOM®
TELECOMMUNICATIONS SERVICE,

MEGACOM® 800
TELECOMMUNICATIONS SERVICE

102-N

COMMUNICATION
DEVICE

13

**FIG. 3**

**FIG. 4**     TRANSLATION DATA

202-N

202-2
202-1

CALL BY CALL TRUNK GROUP N

CALL BY CALL TRUNK GROUP 2

CALL BY CALL TRUNK GROUP 1

GENERAL TRUNK GROUP TRANSLATION DATA:

TRUNK TYPE: _____ 401
SERVICE TYPE: _____ 402
USAGE ALLOCATION: _____ 403

PORT ID
404-1 _____

_____

401-M

_____

CBS SPECIFIC TRANSLATION DATA:

SCHEDULING METHOD: _____ 409
FIXED PLAN: _____ 410

406

USAGE ALLOCATION PLAN 3

USAGE ALLOCATION PLAN 2

USAGE ALLOCATION PLAN 1

| COMMUNICATIONS SERVICE | MINIMUM | MAXIMUM |
|---|---|---|
| 411-i | 412-1 | 413-1 |
| ⋮ | ⋮ | ⋮ |
| 411-P | 412-P | 413-P |

407-1     407-2  407-3

408-7

SATURDAY SCHEDULE

MONDAY SCHEDULE

SUNDAY SCHEDULE

| START TIME | PLAN # |
|---|---|
| 414-1 | 415-1 |
| 414-Q | 415-Q |

408-1   408-2

15

# FIG. 5

202-N

202-2
202-1

STATUS DATA

CALL BY CALL TRUNK GROUP N

CALL BY CALL TRUNK GROUP 2

CALL BY CALL TRUNK GROUP 1     504

501-M

501-2

501-1

MEMBER M STATUS

MEMBER 2 STATUS

MEMBER 1 STATUS

COMMUNICATIONS SERVICE: _____ 502

CALL BY CALL SPECIFIC STATUS

PLAN IDENTIFIER _____ 505
RESERVED COUNT: _____ 506
TRANSITION TIMER: _____ 507

508-P

508-2

COMMUNICATIONS SERVICE P

COMMUNICATIONS SERVICE 2

COMMUNICATIONS SERVICE 1

ACTIVE COUNT: ___ 509
QUEUE FREED COUNT: ___ 510    508-1

CALL BY CALL SPECIFIC
TRAFFIC STATUS

512-P

512-2

512-1

COMMUNICATIONS SERVICE P

COMMUNICATIONS SERVICE 2

COMMUNICATIONS SERVICE 1

TOTAL USAGE: _____ 513
TOTAL CALL COUNT: _____ 514
INCOMING CALL COUNT: _____ 515
QUEUE DATA: _____ 516
TRUNK GROUP OVERFLOW: _____ 517
MAXIMUM OVERFLOW: _____ 518
RESERVED OVERFLOW: _____ 519
TIME BELOW MINIMUM: _____ 520
ALL TRUNKS BUSY: _____ 521
BLOCKED COUNT: _____ 522

511

# FIG. 6
INCOMING TRUNK CALL ATTEMPT

601 — DETERMINE COMMUNICATIONS SERVICE FROM INCOMING SETUP MESSAGE

602 — IS A USAGE ALLOCATION PLAN IN EFFECT FOR THIS TRUNK GROUP

NO

YES

605 — WILL CURRENT USAGE ALLOCATION PLAN AND CURRENT STATUS DATA ALLOW CALL

NO

YES

608 — RECORD USAGE ALLOCATION REJECTION WITH TRAFFIC DATA

606 — UPDATE STATUS DATA (RECORD COMMUNICATIONS SERVICE) (INCREMENT STATUS COUNT) START TRAFFICE RECORDING

603 — UPDATE STATUS DATA (RECORD COMMUNICATIONS SERVICE)

609 — REJECT THE INCOMING TRUNK CALL

607 — ACCEPT THE INCOMING TRUNK CALL

604 — ACCEPT THE INCOMING TRUNK CALL

# FIG. 7

OUTGOING TRUNK CALL ATTEMPT

701 DETERMINE REQUESTED COMMUNICATIONS SERVICE FROM DIALED DIGITS ANALYSIS

702 IS A USAGE ALLOCATION PLAN IN EFFECT FOR THIS TRUNK GROUP

NO → 703 UPDATE STATUS DATA (RECORD COMMUNICATIONS SERVICE)

YES

705 WILL CURRENT USAGE ALLOCATION PLAN AND CURRENT STATUS DATA ALLOW CALL

NO → 711 RECORD USAGE ALLOCATION REJECTION WITH TRAFFIC DATA

YES → 706 UPDATE STATUS DATA (RECORD COMMUNICATIONS SERVICE) (INCREMENT) START TRAFFIC RECORDING

703 UPDATE STATUS DATA (RECORD COMMUNICATIONS SERVICE)

704 ALLOW NORMAL OUTGOING TRUNK GROUP PROCESSING TO CONTINUE

712 CAN THIS CALL BE ROUTED OVER ANOTHER TRUNK GROUP

YES → 713 DETERMINE NEW TRUNK GROUP AND REROUTE THE CALL

NO

707 ALLOW NORMAL OUTGOING TRUNK GROUP PROCESSING TO CONTINUE

708 DID THE OUTGOING TRUNK CALL SUCCEED

NO → 709 UPDATE STATUS DATA (DECREMENT) END TRAFFIC RECORDING

714 CAN OUTGOING TRUNK QUEUEING BE ACTIVATED

NO → 716 REJECT THE TRUNK CALL ATTEMPT

YES → 715 QUEUE THE TRUNK CALL ATTEMPT

YES → 710 CONTINUE TRAFFIC RECORDING (OUTGOING TRUNK CALL ESTABLISHED)

# FIG. 8

DETERMINE IF CALL IS ALLOWED (PART I)

800 — IS THE CHECK DUE TO AN OUTGOING CALL → YES → 801 SET QFREED TO THE NUMBER OF QUEUE FREED CALLS RECORDED FOR THIS COMMUNICATIONS SERVICE IN THE STATUS DATA

↓ NO

802 — IS THE CHECK DUE TO AN INCOMING CALL → YES → 803 SET QFREED TO 0

↓ NO

804 — IS THE CHECK DUE TO THE SERVICING OF A QUEUED CALL → YES → 805 SET QFREED TO THE NUMBER OF QUEUE FREED CALLS RECORDED FOR THIS COMMUNICATIONS SERVICE IN THE STATUS DATA MINUS 1

↓ NO

806 INVALID REQUEST REPORT ERROR

807 IS THE NUMBER OF ACTIVE CALLS RECORDED FOR THIS COMMUNICATIONS SERVICE IN THE STATUS DATA PLUS QFREED LESS THEN THE ADMINISTERED MINIMUM FOR THIS COMMUNICATIONS SERVICE

YES → 808 ALLOW THE CALL TO CONTINUE

↓ NO

CONTINUE WITH DETERMINE IF CALL IS ALLOWED (PART II)

19

# FIG. 9

DETERMINE IF CALL IS ALLOWED (PART II)

# FIG. 10

```
                                                    ┌─────────────┐
                                                   ╱     IS        ╲  1001
                                          NO      ╱   THERE AN      ╲
                                    ◄────────────◄  AVAILABLE QUEUE SLOT ►
                                                  ╲    FOR THIS     ╱
                                                   ╲    CALL       ╱
                                                    └──────┬──────┘
                                                           │ YES
```

1002
UPDATE TRAFFIC MEASUREMENTS

1003
REJECT THE REQUEST TO
QUEUE THE CALL (QUEUE FULL)

1004
IS A
USAGE ALLOCATION PLAN
IN EFFECT FOR THIS
TRUNK GROUP

1005
DETERMINE THE REQUESTED
COMMUNICATIONS SERVICE
FROM DIALED DIGIT
ANALYSIS

1006
WILL
THE CURRENT
USAGE ALLOCATION PLAN
EVER ALLOW THIS
CALL

1008
UPDATE TRAFFIC MEASUREMENTS

1007
REJECT THE REQUEST
TO QUEUE THIS CALL

1009
ACCEPT THE REQUEST TO
QUEUE THIS CALL

## FIG. 11

RELEASE A RESOURCE FOR WHICH A CALL HAS BEEN QUEUED

**1101**
BEGIN WITH THE
FIRST CALL IN THIS QUEUE

**1102**
HAS
THIS CALL ALREADY
BEEN QUEUED
FREED — NO

**1104**
ADDRESS THE NEXT
CALL IN THE QUEUE

YES

**1103**
IS
THERE ANOTHER CALL
IN THIS QUEUE

YES

NO

**1105**
WILL
THE CURRENT
USAGE ALLOCATION
PLAN AND CURRENT STATUS
DATA ALLOW THIS CALL TO ACCESS
THE COMMUNICATIONS
SERVICE FOR WHICH
IT WAS QUEUED

NO

YES

**1106**
UPDATE STATUS DATA (RECORD
COMMUNICATION SERVICE) (INCREMENT)

**1108**
NO ADDITIONALS QUEUED CALL
TO CHECK (DO NOTHING)

**1107**
CONSIDER THIS CALL QUEUE FREED
QUEUE SERVICE THIS CALL